# EUROPÄISCHE PATENTSCHRIFT

(11) **EP 1 495 227 B1**
(45) Veröffentlichungstag und Bekanntmachung des Hinweises auf die Patenterteilung: **21.05.2008**
(21) Anmeldenummer: 02732510.9
(22) Anmeldetag: 21.03.2002
(51) Int. Cl.: F04B 23/12, F04B 23/08, F04C 15/00, F04C 11/00

(54) **HYDRAULISCHES PUMPENAGGREGAT**
HYDRAULIC PUMP UNIT
GROUPE MOTOPOMPE HYDRAULIQUE

(30) Priorität: 06.04.2001 DE 10117373
(43) Veröffentlichungstag der Anmeldung: 12.01.2005
(73) Patentinhaber: Bosch Rexroth AG, 70184 Stuttgart (DE)
(72) Erfinder: FISCHER, Günter, 53489 Sinzig-Löhndorf (DE); KNÖLL, Reiner, 97775 Burgsinn (DE)
(86) Internationale Anmeldenummer: PCT/EP2002/003166
(87) Internationale Veröffentlichungsnummer: WO 2002/081913

(56) Entgegenhaltungen:
- WO-A-93/18303
- WO-A-97/47884
- GB-A- 545 918
- US-A- 3 897 178
- US-A- 3 941 505
- US-A- 5 261 796

## Beschreibung

Die Erfindung geht aus von einem hydraulischen Pumpenaggregat, das gemäß dem Oberbegriff des Patentanspruchs 1 eine hydrostatische Systempumpe, von der über einen Druckanschluß ein hydraulisches Arbeitssystem mit Druckflüssigkeit versorgbar ist, eine zweite Pumpe, von der Druckflüssigkeit über eine Einlaßöffnung ansaugbar und einem Niederdruckbereich der Systempumpe zuführbar ist, und einen einen Gehäusemantel aufweisenden Elektromotor umfaßt, von dem die beiden Pumpen gemeinsam antreibbar sind.

Aus der WO 93/18303 A ist ein hydraulisches Pumpenaggregat bekannt, das zwei Pumpen aufweist, die von einem Elektromotor angetrieben werden. Die beiden Pumpen haben einen gemeinsamen Niederdruckbereich. Die von der als Hauptpumpe bezeichneten Pumpe geförderte Druckflüssigkeit gelangt über einen zugeordneten Hochdruckanschluss des Gehäuses des Pumpenaggregats in einen hydraulischen Arbeitskreislauf. Die zusätzliche Pumpe fördert eine Hilfsdruckflüssigkeitsmenge durch den Elektromotor hindurch, damit dieser gekühlt wird.

Aus der GB 545 918 A ist die Kombination einer Zahnradpumpe mit einer Zentrifugalpumpe bekannt. Die Zentrifugalpumpe gibt die von ihr geförderte Druckflüssigkeit in die Zahnzwischenräume der Zahnradpumpe ab.

Ein hydraulisches Pumpenaggregat mit den Merkmalen aus dem Oberbegriff des Patentanspruchs 1 ist aus der DE-OS 23 31 917 bekannt. Dort ist die Systempumpe eine Innenzahnradpumpe mit einem konstanten Hubvolumen, so daß die von der Systempumpe geförderte Druckflüssigkeitsmenge allein von der Drehzahl des Elektromotos abhängt. Das Ritzel der Innenzahnradpumpe sitzt auf der einen Seite des Rotors des Elektromotors auf der Motorwelle. Die zweite Pumpe ist bei dem bekannten hydraulischen Pumpenaggregat eine Kreiselpumpe, deren Laufrad auf der gegenüberliegenden Seite des Rotors des Elektromotors auf der Motorwelle befestigt ist.

Der Gehäusemantel des Elektromotors hat an jeder Stirnseite einen Außenflansch, wobei mit einem vorderen Außenflansch auf Seiten der Systempumpe ein vorderer Stirndeckel und mit dem hinteren Außenflansch auf Seiten der Kreiselpumpe ein zweiteiliger hinterer Stirndeckel verschraubt ist. Zwischen den beiden Außenflanschen verlaufen an den Gehäusemantel des Elektromotors angeformte Längsrippen. Zum Gehäusemantel des Elektromotors gehört noch ein Blechzylinder, der von Außenflansch zu Außenflansch reicht und in einem geringen Abstand zu den radial außen befindlichen Enden der Längsrippen um den gegossenen inneren Körper des Gehäusemantels herumläuft. Der hintere Stirndeckel bildet zugleich das Gehäuse der Kreiselpumpe und ist mit Kanälen versehen, die durch mehrere durch den hinteren Außenflansch hindurchgehende Bohrungen mit dem Freiraum innerhalb des zylindrischen Bleches und zwischen den Längsrippen verbunden ist. Auch im vorderen Außenflansch befinden sich axiale Bohrungen, die den Freiraum innerhalb des zylindrischen Bleches über eine umlaufende Ringnut in einer der aneinanderliegenden Stirnseiten von Außenflansch und vorderem Stirndeckel mit einem durch diesen Stirndeckel hindurchgehenden Fluidpfad zum Niederdruckbereich der Systempumpe verbinden.

Im Betrieb saugt die Kreiselpumpe über eine zentrale Ansaugöffnung Druckflüssigkeit an und fördert sie über die Kanäle und Freiräume im hinteren Stirndeckel, im Gehäusemantel und im vorderen Stirndeckel zum Niederdruckbereich der Systempumpe. Nach der Beschreibung der DE-OS 23 31 917 führt die von der Kreiselpumpe geförderte und durch den Gehäusemantel des Elektromotors hindurchströmende, insbesondere an den Längsrippen entlangströmende Druckflüssigkeit die Verlustwärme des Elektromotors zum größten Teil ab. Das bekannte hydraulische Pumpenaggregat bringt es also mit sich, daß nicht nur durch Leistungsverluste im Arbeitssystem, sondern auch durch die Verluste des Elektromotors Wärme in die Druckflüssigkeit eingetragen wird. Ohne das Vorsehen eines externen Kühlkreislaufes erscheint das bekannte Pumpenaggregat deshalb nur intervallweise betreibbar. Wird aber ein zusätzlicher Kühlkreislauf vorgesehen, so ist eine zusätzliche Pumpe und ein zusätzlicher Antrieb für diese Pumpe oder ein Ventil notwendig, das den Ausgang der Systempumpe auf den Kühlkreislauf schaltet, wenn das Arbeitssystem keine Druckflüssigkeit braucht.

Der Erfindung liegt die Zielsetzung zugrunde, ein hydraulisches Pumpenaggreat zu schaffen, das es erlaubt die Leistungsverluste im Arbeitssystem gering zu halten und das einen Dauerbetrieb ermöglicht, ohne daß die Termperatur der Druckflüssigkeit auf Werte ansteigt, die erhöhte Leckage und eine rasche Alterung der Druckflüssigkeit verursachen.

Ausgehend von einem hydraulischen Pumpenaggregat gemäß dem Oberbegriff des Patentanspruchs 1 wird das gesetzte Ziel dadurch erreicht, daß gemäß dem kennzeichnenden Teil des Patentanspruchs 1 die Systempumpe eine druckgeregelte Verstellpumpe ist und daß von der zweiten Pumpe Druckflüssigkeit unter Umgehung der Systempumpe im Umlauf von einer Einlaßöffnung über einen Kühlkreislauf in eine Rücklauföffnung gefördert wird. Bei einem erfindungsgemäßen hydraulischen Pumpenaggregat kann durch die Verstellpumpe die geförderte Druckflüssigkeit an den Bedarf des Arbeitssystems angepaßt werden, so daß keine unnötigen Drosselverluste entstehen. Von der zweiten Pumpe geförderte und vom Arbeitssystem nicht benötigte Druckflüssigkeit fließt nicht über die Systempumpe, d.h. nicht über den Niederdruckbereich und den Hochdruckbereich der Systempumpe in den Kühlkreislauf. Der Niederdruckbereich der Systempumpe ist vielmehr nur im Bypass an den vom Auslaß der zweiten Pumpe ausgehenden Fluidpfad angeschlossen. Die Systempumpe holt sich die gemäß ihrer Einstellung zu fördernde Druckflüssigkeit von der zweiten Pumpe. Die Restmenge der von der zweiten Pumpe geförderten Druckflüssigkeit gelangt durch den Kühlkreislauf zur Rücklauföffnung, ohne die Systempumpe vom Niederdruckbereich zum Hochdruckbereich durchströmt zu haben. Die zweite Pumpe ist insbesondere auch im Hinblick auf kurze Verstellzeiten der Systempumpe von großem Vorteil. Ist die Systempumpe z.B. druckgeregelt und fällt der Druck im Arbeitssystem zusammen, so wird die große Fördermenge nach sehr kurzer Zeit erreicht, da die Druckflüssigkeit im Ansaugtrakt nicht erst beschleunigt werden muß, sondern aufgrund der zweiten Pumpe schon eine Flüssigkeitsströmung vorhanden ist.

Vorteilhafte Ausgestaltungen eines erfindungsgemäßen hydraulischen Pumpenaggregats kann man den Unteransprüchen entnehmen.

So ist gemäß Patentanspruch 2 die zweite Pumpe zweckmäßigerweise ebenfalls eine hydrostatische Pumpe, deren Fördermenge größer als die maximale Fördermenge der Systempumpe ist. Die Fördermenge einer hydrostatischen Pumpe hängt nur geringfügig von der Temperatur der Druckflüssigkeit ab.

Im Druckregelbetrieb ist eine Verstellpumpe meist auf ein sehr geringes Hubvolumen eingestellt, durch das praktisch nur die interne Leckage in der Verstellpumpe ausgeglichen wird. Es bleibt weitgehend dieselbe Druckflüssigkeit in der Verstellpumpe, so daß darin hohe Temperaturen auftreten können. Dies gilt auch für verstellbare Flügelzellenpumpen. Bei einem hydraulischen Pumpenaggregat mit einer verstellbaren Flügelzellenpumpe als Systempumpe lassen sich hohe Temperaturen in der Systempumpe mit großer Sicherheit dadurch vermeiden, daß gemäß Patentanspruch 3 von der zweiten Pumpe in den Kühlkreislauf geförderte Druckflüssigkeit im Niederdruckbereich der Flügelzellenpumpe zwischen deren Rotor und deren Hubring axial hindurchfließt. Auf diese Weise wird die Druckflüssigkeit in der Systempumpe auch im Druckregelbetrieb ständig ausgetauscht, dadurch Wärme aus der Systempumpe abgeführt und so eine erhöhte Temperatur in der Systempumpe vermieden. Die beiden Pumpen des hydraulischen Pumpenaggregats sind vorteilhafterweise auf derselben Seite des Elektromotors angeordnet, da dann die beiden Pumpen zu einer Baueinheit zusammengefaßt werden können, die für sich handhabbar ist. Insbesondere befindet sich gemäß Patentanspruch 4 die Flügelzellenpumpe zwischen der zweiten Pumpe und dem Elektromotor. Dabei liegen der Hochdruckbereich der zweiten Pumpe und der Niederdruckbereich der Flügelzellenpumpe axial hintereinander und von der zweiten Pumpe geförderte Druckflüssigkeit strömt vor dem Eintritt in den Kühlkreislauf zunächst durch die Flügelzellenpumpe. Durch die gewählte Anordnung des Hochdruckbereichs der zweiten Pumpe und des Niederdruckbereichs der Flügelzellenpumpe zueinander können diese beiden Druckbereiche auf sehr einfache Weise durch einen im wesentlichen axial verlaufenden Kanal fluidisch miteinander verbunden werden.

Gemäß Patentanspruch 5 führt der Kühlkreislauf durch einzelne Kanäle im Gehäusemantel des Elektromotors hindurch zu der Rücklauföffnung. Wesentlich erscheint hier, daß die Druckflüssigkeit keinen den Gehäusemantel vollständig umgebenden Ring bildet, so daß Wärme vom Gehäusemantel nur über die Druckflüssigkeit an die Umgebung abgegeben werden könnte. Vielmehr grenzt der Gehäusemantel selbst an die umgebende Luft an, so daß er unmittelbar Wärme an die Luft abgibt. Diese Wärmeabgabe kann durch Kühlrippen am Gehäusemantel noch verbessert werden. Der Gehäusemantel kann nun auch Wärme aus der Druckflüssigkeit aufnehmen und an die Umgebung abgeben. Dadurch kommt die Druckflüssigkeit aus dem Gehäusemantel zur Rücklauföffnung mit einer Temperatur zurück, die niedriger ist als am Ausgang der zweiten Pumpe.

Gemäß Patentanspruch 6 befindet sich die Rücklauföffnung vor derselben Stirnseite des Gehäusemantels wie die Einlaßöffnung, so daß im Kühlkreislauf der Gehäusemantel wenigstens zweimal in Längsrichtung durchströmt wird.

Damit der Durchflußwiderstand durch den Kühlkreislauf und die damit verbundenen Verluste gering bleiben, sollte die Druckflüssigkeit in den Kanälen des Gehäusemantels laminar strömen. Dies wird durch einen entsprechenden Querschnitt der Kanäle bzw. dadurch erreicht, daß mehrere Kanäle parallel durchströmt werden. Andererseits kann bei einer laminaren Strömung nur eine äußere Schicht des Druckflüssigkeitsstroms gut Wärme an den Gehäusemantel abgeben. Wird der Gehäusemantel mehrmals von der Druckflüssigkeit durchströmt, so kann man durch die Umlenkung an den Stirnseiten des Gehäusemantels eine Durchmischung der Druckflüssigkeit und eine bessere Kühlung erreichen, ohne daß der Durchflußwiderstand durch den Kühlkreislauf übermäßig ansteigen würde. Vorteilhafte Ausgestaltungen des Kühlkreislaufs im Hinblick auf die angeführten Kriterien sind in den Unteransprüchen 7 bis 10 enthalten. Im Patentanspruch 11 ist angegeben, wie zwei oder mehr Kanäle an einer Stirnseite des Gehäusemantels auf vorteilhafter Weise miteinander verbunden werden können. Ein die Pumpenkammer der Systempumpe mit einer Aussparung im Gehäusemantel verbindender Kanal mündet gemäß Patentanspruch 12 vorteilhafterweise radial in die Aussparung bzw. in eine die Aussparung nach innen vergrößernde Tasche des entsprechenden Pumpengehäuseteils.

Zur Erhöhung der Kühlleistung ist gemäß Patentanspruch 13 ein Lüfterrad vorhanden, das einen über den Gehäusemantel des Elektromotors streichenden Luftstrom erzeugt.

Zwei Ausführungsbeispiele eines erfindungsgemäßen hydraulischen Pumpenaggregats sind in den Zeichnungen dargestellt. Anhand der Figuren dieser Zeichnungen wird die Erfindung nun näher erläutert.

### Es zeigen

- Figur 1: in einem Längsschnitt das erste Ausführungsbeispiel, bei dem längsverlaufende Kühlkanäle im Gehäusemantel des Elektromotors durch axial offene Nuten in den am Gehäusemantel sitzenden Stirndeckeln fluidisch miteinander verbunden sind,
- Figur 2: einen Schnitt entlang der Linie II-II aus Figur 1,
- Figur 3: einen Schnitt entlang der Linie III-III aus Figur 1,
- Figur 4: einen Schnitt entlang der Linie IV-IV aus Figur 1,
- Figur 5: einen Schnitt entlang der Linie V-V aus Figur 1,
- Figur 6: einen Schnitt entlang der Linie VI-VI aus Figur 3,

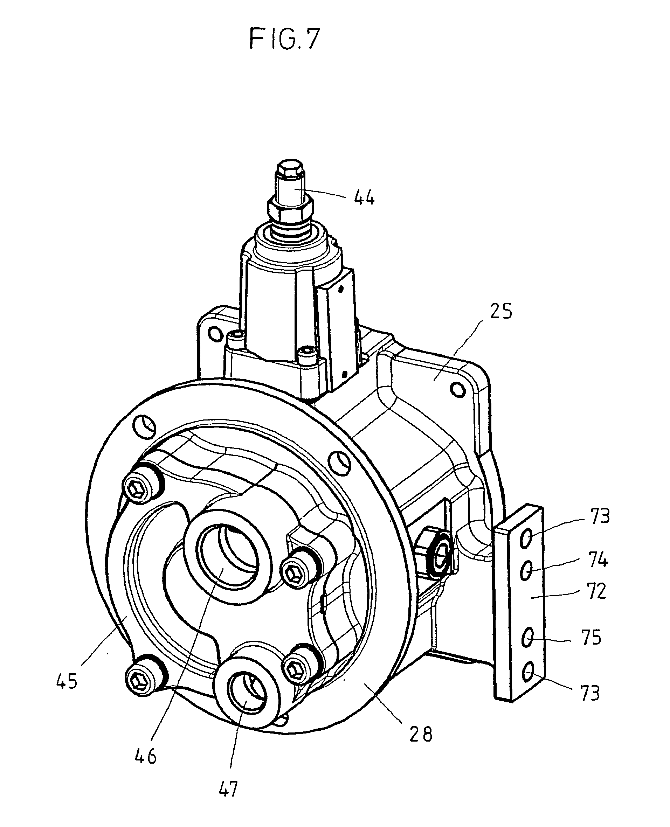

- Figur 7: eine perspektivische Ansicht auf die beiden Pumpen des ersten Ausführungsbeispiels,
- Figur 8: einen Längsschnitt durch das zweite Ausführungsbeispiel, bei dem Kanäle im Gehäusemantel des Elektromotors durch radial offene Taschen im Gehäusemantel und in den Stirndeckeln miteinander verbunden sind und bei dem ein Fremdlüfter an den Elektromotor angebaut ist, und
- Figur 9: einen Schnitt entlang der Linie VIII-VIII aus Figur 8.

Die gezeigten hydraulischen Pumpenaggregate besitzen einen Elektromotor 10, von dem gemeinsam eine verstellbare druckgeregelte Flügelzellenpumpe 11 und eine Innenzahnradpumpe 12 angetrieben werden, die sich zusammen an derselben Seite des Elektromotors befinden. Der Elektromotor 10 besitzt einen Gehäusemantel 13, der einschließlich an seiner Außenseite längsverlaufender Kühlrippen 14 aus einem Strangprofil hergestellt ist. Schon beim Stranggießen in den Gehäusemantel 13 gleichmäßig über den Umfang verteilt eingebracht sind außerdem sechzehn 16 Kanäle 15, die einen, im Umfangsrichtung gesehen, etwas länglichen Querschnitt besitzen. An der Innenseite des Gehäusemantels 13 ist der Stator 16 des Elektromotors befestigt. Auf der den Pumpen 11 und 12 gegenüberliegenden Seite ist der Gehäusemantel durch einen hinteren Deckel 17 verschlossen, von dem ein erstes Lager 18 für die den Rotor 19 des Elektromotors tragende Motorwelle 20 aufgenommen ist.

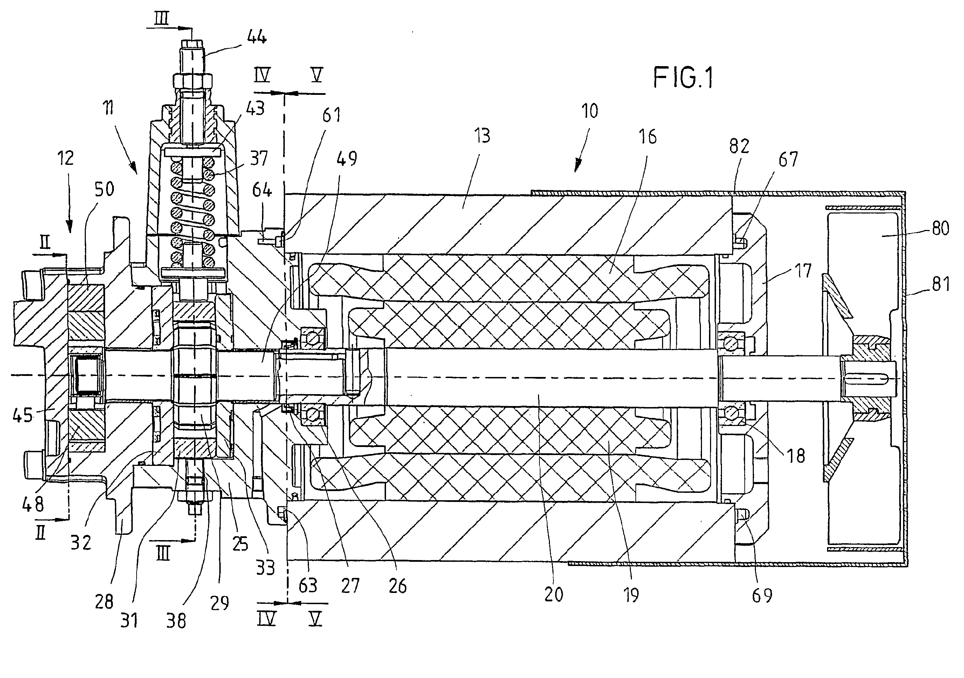

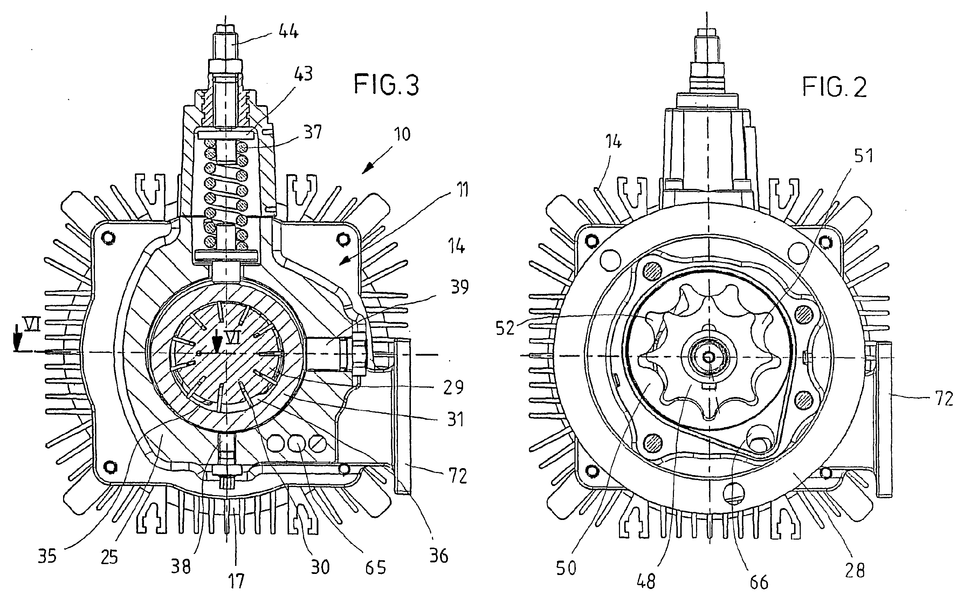

Die andere Seite des Gehäusemantels 13 ist durch einen vorderen Deckel verschlossen, der zugleich den Gehäusegrundkörper 25 der Flügelzellenpumpe 11 bildet und von dem ein zweites Lager 26 für die Motorwelle 20 aufgenommen ist. Pumpenseitig des Lagers 26 befindet sich ein Wellendichtring 27, der den Innenraum des Elektromotors gegen Eintrag von Druckflüssigkeit entlang der Welle schützt. Ein Gehäuseteil 28, das einerseits einen Deckel für die Flügelzellenpumpe 11 und andererseits den Gehäusegrundkörper für die Innenzahnradpumpe 12 darstellt, ist mit einem Zentrier- und Dichtbund in den Gehäusegrundkörper 25 eingesetzt und bildet mit diesem eine Pumpenkammer, in der sich ein Pumpenrotor 29 mit in axial und radial nach außen offenen Schlitzen geführten Flügel 30, ein den Rotor umgebender Hubring 31, an dem die Flügel 30 innen anliegen und der in einer in der Zeichenebene der Figur 1 liegenden und senkrecht zur Achse der Motorwelle 12 verlaufenden Richtung beweglich ist, und zwei Seitenscheiben 32 und 33 befinden, die mit einem leichten Kraftüberschuß axial am Rotor 29 und am Hubring 32 anliegen, um an den beiden Stirnseiten von Rotor und Hubring einen Niederdruckbereich 35 der Flügelzellenpumpe 11 von einem Hochdruckbereich 36 zu trennen. Nach Figur 3 betrachtet, wird der Pumpenrotor 29 also entgegen dem Uhrzeigersinn angetrieben. In Richtung seiner Beweglichkeit wird der Hubring von einer Druckfeder 37 gegen eine Verstellschraube 38 gedrückt, mit der die maximale Exzentrizität zwischen dem Rotor und dem Hubring und damit das maximale Hubvolumen der Flügelzellenpumpe eingestellt werden kann. Im Betrieb übt der im Hochdruckbereich der Pumpe anstehende Druck eine Kraft auf den Hubring aus, die eine kleinere gegen die Feder 37 wirkende Komponente und eine auf der kleineren Komponente senkrecht stehende größere Komponente hat, die von einer Höheneinstellschraube 39 aufgenommen wird. Setzt man einen konstanten Druck im Niederdruckbereich 35 voraus, so wird bei einem bestimmten Druck im. Hochdruckbereich die kleine Komponente der von diesem Druck erzeugten Kraft so groß wie die Kraft der Druckfeder 37, so daß der Hubring 31 in Richtung Verkleinerung der Exzentrizität zwischen ihm und dem Pumpenrotor bewegt wird. Durch die Verstellpumpe 11 wird dann ein bestimmter Druck am Ausgang aufrechterhalten. Wird vom angeschlossenen Arbeitssystem keinerlei Menge mehr benötigt, so stellt sich der Hubring auf eine solch geringe Exzentrizität ein, daß gerade eine der inneren Leckage der Pumpe entsprechende Menge gefördert wird. Damit der Druck, bei dem die Pumpe 11 abregelt, einstellbar ist, stützt sich die Druckfeder 37 an einem Federteller 43 ab, dessen Position durch eine Verstellschraube 44 verändert werden kann.

Das Gehäuseteil 28 bildet mit einem Abschlußdeckel 45, in dem sich eine Einlaßöffnung 46 und eine Rücklauföffnung 47 befinden die Pumpenkammer für die Innenzahnradpumpe 11 aus. In dieser befindet sich ein außenverzahntes Ritzel 48, das auf einem in die Pumpenkammer hineinragenden Zapfen einer Pumpenwelle 49 verdrehsicher befestigt ist, die auch den Rotor 29 der Flügelzellenpumpe 11 trägt oder einstückig aufweist, beidseits dieses Rotors in den Gehäuseteilen 25 und 28 mithilfe von Gleitlagern drehbar gelagert ist und verdrehsicher mit der Motorwelle 20 gekoppelt ist. Das Ritzel 48 kämmt mit einem exzentrisch zu ihm in dem Gehäuseteil 28 drehbar gelagerten, innenverzahnten Hohlrad 50, das einen Zahn mehr als das Ritzel hat. Die Verzahnung der Pumpe 12 ist so ausgeführt, daß, abgesehen von den üblichen Toleranzen , jeder Zahn des Ritzels 48 an der Verzahnung des Hohlrads 50 anliegt. Dadurch wird zwischen dem Ritzel und dem Hohlrad eine erste Gruppe von Pumpenkammern gebildet, deren Volumen sich beim Drehen des Ritzels und des von diesem mitgenomenen Hohlrads vergrößert, die gemeinsam mit der Einlaßöffnung 46 verbunden sind und die somit der Ansaug- oder Niederdruckbereich 51 der Pumpe 12 sind. Für eine zweite Gruppe von Pumpenkammern verkleinert sich das Volumen, wenn sich Ritzel und Hohlrad drehen. Alle Kammern dieser zweiten Gruppe sind durch eine Vertiefung 54 im Gehäuseteil 28 vor der einen Stirnseite von Ritzel und Hohlrad miteinander verbunden und bilden den Hochdruckbereich 52 der Pumpe 12. Sichellose Innenzahnradpumpen der beschriebenen Art sind allgemein bekannt, so daß auf ihre Arbeitsweise nicht weiter eingegangen werden muß.

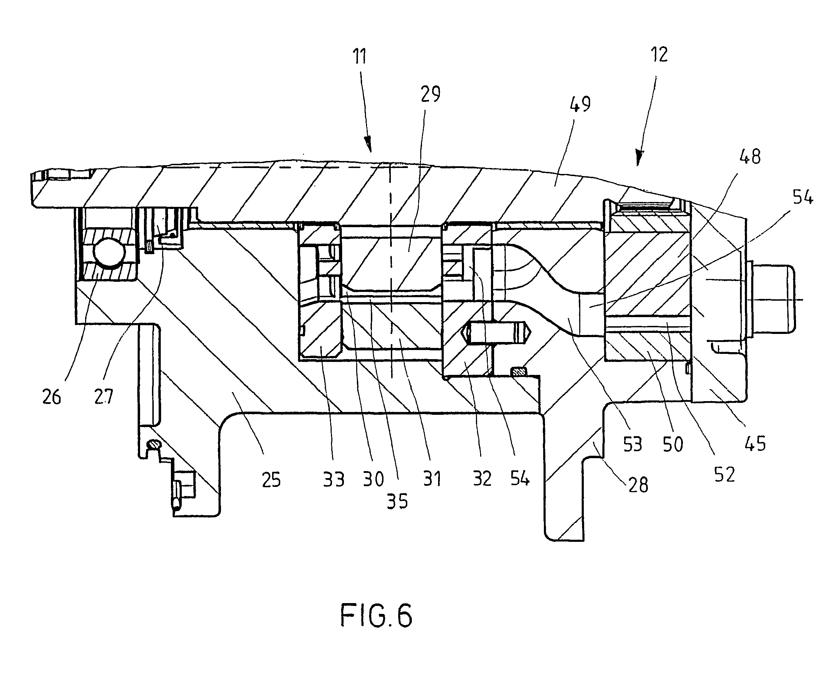

Bei beiden Ausführungsbeispielen sind die Innenzahnradpumpe 12 und die Flügelzellenpumpe 11 nun derart zueinander angeordnet, daß sich der Hochdruckbereich 52 der Innenzahnradpumpe 12 und der Niederdruckbereich 35 der Flügelzellenpumpe 11 im wesentlichen auf derselben Seite einer durch die Achse der Pumpenwelle 49 und die Achse der Druckfeder 37 aufgespannten Ebene befinden. Die beiden Bereiche 52 und 35 sind auf einfache Weise durch das Gehäuseteil 28 und die Seitenscheibe 32 der Flügelzellenpumpe 11 hindurch fluidisch miteinander verbunden. Wie aus Figur 6 ersichtlich ist dazu nur ein von der Vertiefung 54 ausgehender abgekröpfter Kanal 53 im Gehäuseteil 28 und ein Durchbruch 54 in der Seitenscheibe 32 notwendig.

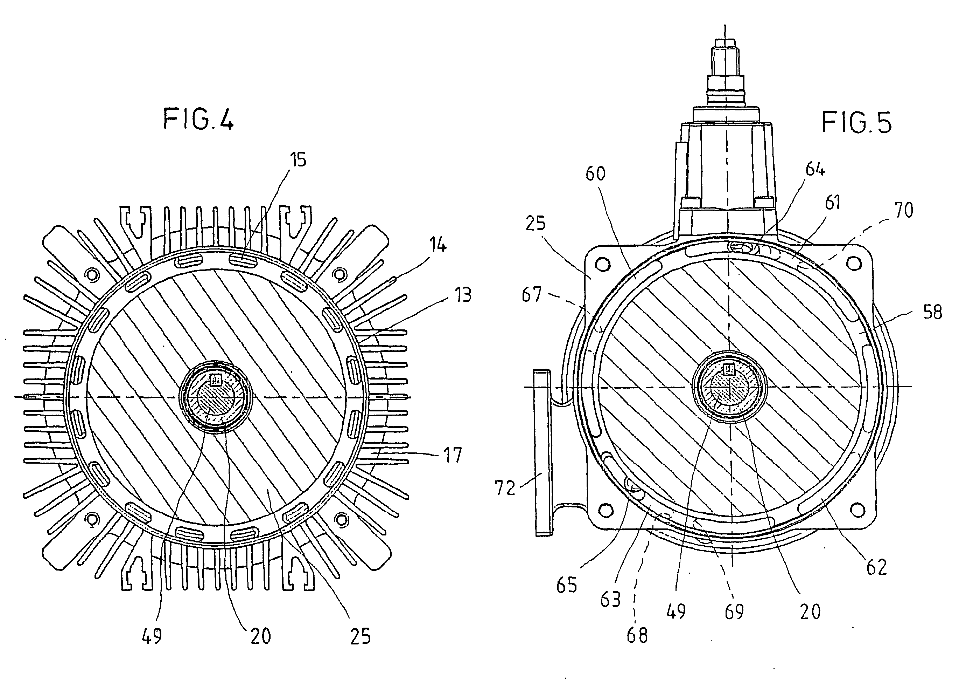

Der Gehäusegrundkörper 25 hat außerhalb des Bundes, mit dem er in den Gehäusemantel 13 des Elektromotors 10 eintaucht, eine axiale Flanschfläche 58, in der vier ringförmig verlaufende, zum Gehäusemantel 13 hin axial offene Nuten 60, 61, 62 und 63 gleichmäßig über den Umfang verteilt ausgefräst sind. Jede Nut ist zu vier benachbarten Kanälen 15 des Gehäusemantels 13 hin offen. Die Nut 61 ist außerdem durch das Gehäuseteil 25 und die Seitenscheibe 33 hindurch mit dem Niederdruckbereich 35 der Flügelzellenpumpe 11 und damit mit dem Hochdruckbereich 52 der Innenzahnradpumpe 12 verbunden. Ein Teil des dazu erforderlichen Fluidpfades 64 durch das Gehäuseteil 25 ist aus den Figuren 1 und 5 ersichtlich. Die der Nut 61 gegenüberliegende Nut 63 ist über Bohrungen 65 im Gehäuseteil 25 und eine Bohrung 66 im Gehäuseteil 28 mit der Rücklauföffnung 47 im Abschlußdeckel 45 verbunden.

Auch der hintere Deckel 17 besitzt in einer axial am Gehäusemantel 13 anliegenden Flanschfläche vier gleichmäßig über den Umfang verteilte Nuten 67, 68, 69 und 70, von denen in Figur 1 die zwei einander gegenüberliegende Nuten 67 und 69 erkennbar sind. Die Nuten im Deckel 17 sind um 45 Grad gegenüber den Nuten im Gehäuseteil 25 verdreht. Ihre Lage relativ zu den Nuten 67 - 70 im Gehäuseteil 25 ist in Figur 5 durch gestrichelte Bögen verdeutlicht.

Am Gehäuseteil 25 der beiden Pumpen befindet sich seitlich ein Anschlußflansch 72, in dem sich zwei Gewindebohrungen 73, sowie zwei Anschlußbohrungen für das Arbeitssystem, nämlich eine mit dem Hochdruckbereich 36 der Flügelzellenpumpe 11 verbundene Druckbohrung 74 und eine über die Bohrungen 65 und 66 mit der Rücklauföffnung 47 im Deckel 45 verbundene Rücklaufbohrung 75 befinden.

Im Betrieb werden die beiden Pumpen 11 und 12 von dem Elektromotor 10 mit gleicher Drehzahl angetrieben. Das Hubvolumen der Innenzahnradpumpe 12 ist etwas größer als das maximale Hubvolumen der Flügelzellenpumpe 11. Die von der Innenzahnradpumpe 12 durch die Einlaßöffnung 46 angesaugte Druckflüssigkeit gelangt über den Hochdruckbereich 52 der Innenzahnradpumpe 12 in den Niederdruckbereich 35 der Flügelzellenpumpe 11. Diese ist druckgeregelt und fördert, sofern der Systemdruck unterhalb des eingestellten Abregeldruckes liegt, eine durch ihr maximales Hubvolumen bestimmt Teilmenge der von der Innenzahnradpumpe 12 geförderten Druckflüssigkeitsmenge über die Druckbohrung 74 im Anschlußflansch 72 in das hydraulische Arbeitssystem". Die Überschußmenge gelangt durch den Niederdruckbereich der Flügelzellenpumpe 11 hindurch in die Nut 61 des Gehäuseteils 25 und strömt durch die vier zu dieser Nut hin offenen Kanäle 15 des Gehäusemantels 13 zum hinteren Deckel 17. Zwei dieser vier Kanäle öffnen sich dort in die Nut 67 und die zwei anderen Kanäle in die Nut 70. Über jeweils zwei weitere Kanäle 15 fließen die beiden Teilmengen zurück zum Gehäuseteil 25, wobei die eine Teilmenge dort in die Nut 62 und die andere Teilmenge in die Nut 64 gelangt. In den Nuten 62 und 64 wird die Flüssigkeit umgelenkt und fließt wieder zurück zum Deckel 17, wo die eine Teilmenge in die Nut 68 und die andere Teilmenge in die Nut 69 gelangt. Die Teilmengen werden umgelenkt und fließen in vier benachbarten Kanälen 15 zurück zum Gehäuseteil 25, wo sie in die Nut 63 und von dort über die Bohrungen 65 und 66 zur Rücklauföffnung 47 und von dort in den Vorratsbehälter gelangen, aus dem die Innenzahnradpumpe 12 Druckflüssigkeit ansaugt. Auf dem Weg durch den Gehäusemantel 13 geht Wärme von der Druckflüssigkeit auf den Gehäusemantel über, der sie an die Umgebung abgibt. Wenn der an der Druckfeder 37 eingestellte Systemdruck erreicht ist, regelt die Flügelzellenpumpe ab. Bis auf eine geringe, die innere Leckage ersetzende Teilmenge fließt die gesamte von der Innenzahnradpumpe 12 geförderte Druckmittelmenge durch den Niederdruckbereich 35 der Flügelzellenpumpe hindurch in den durch den Gehäusemantel führenden Kühlkreislauf.

Die Motorwelle 20 ragt über den Deckel 17 nach außen und trägt dort ein Lüfterrad 80, das Luft durch ein Schutzgitter 81 ansaugt, die mithilfe eines Leitblechs 82 am Gehäusemantel 13 und zwischen den Kühlrippen 14 entlanggeleitet wird. Dadurch wird der Gehäusemantel 13 besonders wirksam gekühlt.

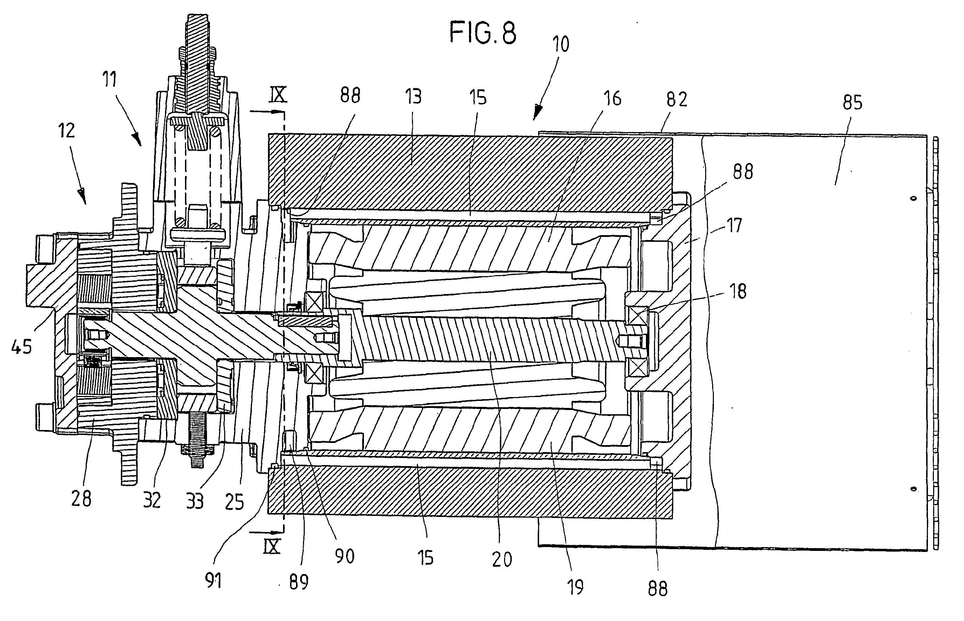

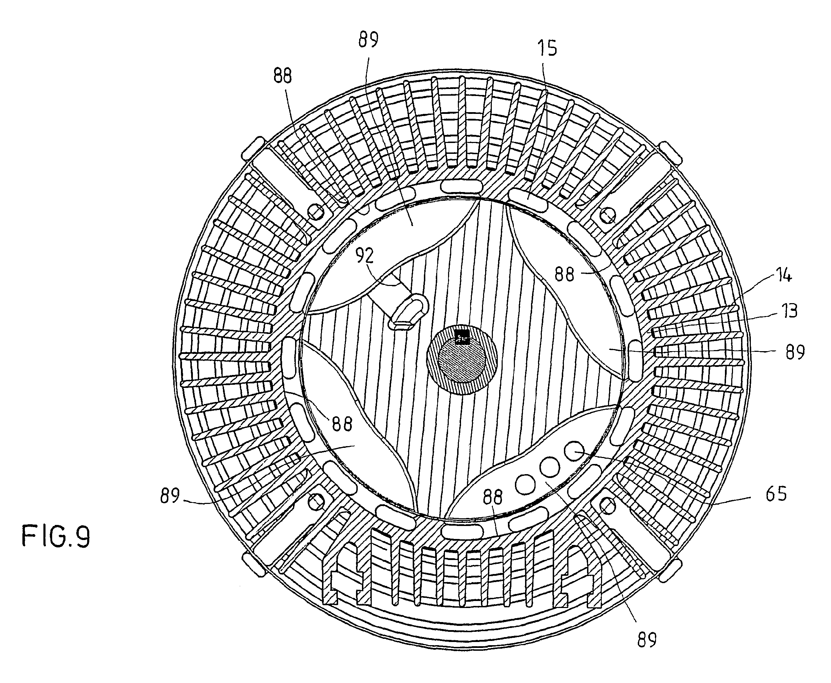

Das Ausführungsbeispiel nach den Figuren 8 und 9 unterscheidet sich in zwei wesentlichen Punkten vom ersten Ausführungsbeispiel. Zum einen geht die Motorwelle 20 nicht durch den hinteren Deckel 17 hindurch, sondern ist darin lediglich durch das Lager 18 gelagert. An dem Elektromotor 10 ist ein Fremdlüfter 85 befestigt, der in nicht näher dargestellter Weise einen eigenen elektrischen Antriebsmotor für ein Lüfterrad hat. Ein Leitblech 82 des Fremdlüfters 85 erstreckt sich über einen gewissen Weg über den Gehäusemantel 13 des Elektromotors 10 hinweg und lenkt den von dem Fremdlüfter erzeugten Luftstrom am Gehäusemantel und dessen Kühlrippen 14 entlang.

Der zweite Unterschied betrifft die Art der Verbindung zwischen den Kühlkanälen 15 an den Stirnseiten des Gehäusemantels 13. Wie insbesondere aus Figur 9 ersichtlich ist, weist der Gehäusemantel 13 vier gleichmäßig über den Umfang verteilte Ausfräsungen 88 auf, von denen jede vier Kanäle 15 überdeckt und axial zum Gehäuseteil 25 sowie radial nach innen offen ist. An jede Ausfräsung 88 des Gehäusemantels 13 schließt sich nach innen hin eine taschenförmige Ausfräsung 89 in einem in dem Gehäusemantel 13 hineintauchenden Bund des Gehäuseteils 25 an. Diese taschenförmigen Ausfräsungen 89 sind in axialer Richtung geschlossen. Eine Ausfräsung 88 im Gehäusemantel 13 und eine Ausfräsung 89 im Gehäuseteil 25 bilden einen großen Freiraum für die Umlenkung der durch den Gehäusemantel strömenden Druckflüssigkeit. Es findet eine starke Durchmischung statt, so daß die Druckflüssigkeit gut gekühlt wird. Die Freiräume aus den Ausfräsungen 88 und 89 sind durch zwei Radialdichtungen 90 und 91 zwischen dem Gehäusemantel und dem Gehäuseteil 25 zum Inneren des Elektromotors hin und nach außen abgedichtet. Eine der Ausfräsungen 89 ist über eine Querbohrung 92 und einen Gußkanal in dem Gehäuseteil 25 sowie über einen Durchbruch in der Seitenscheibe 33 mit dem Niederdruckbereich der Flügelzellenpumpe 11 verbunden. Von der gegenüberliegenden Ausfräsung 89 gehen drei Axialbohrungen 65 aus, die im Rücklauf der Druckflüssigkeit zur Rücklauföffnung im Abschlußdeckel 45 liegen.

Ausfräsungen 88 befinden sich auch an der anderen Stirnseite des Gehäusemantels 13, wobei diese Ausfräsungen um 45 Grad gegenüber den Ausfräsungen an der pumpenseitigen Stirnseite des Gehäusemantels 13 verdreht sind. Die Ausfräsungen 88 an der dem Deckel 17 zugewandten Stirnseite des Gehäusemantels 13 können mit oder ohne Ausfräsungen 89 im Deckel 17 die Freiräume für die Umlenkung der durch die Kanäle 15 strömenden Druckflüssigkeit bilden.

Die Funktionsweise des zweiten Ausführungsbeispiels entspricht vollkommen dem ersten Ausführungsbeispiel, so daß darauf nicht weiter eingegangen werden muß.

## Patentansprüche

1. Hydraulisches Pumpenaggregat mit einer hydrostatischen Systempumpe (11), von der über einen Druckanschluß (74) ein hydraulisches Arbeitssystem mit Druckflüssigkeit versorgt wird, mit einer zweiten Pumpe (12), von der Druckflüssigkeit über eine Einlaßöffnung (46) angesaugt und einem Niederdruckbereich (35) der Systempumpe (11) zugeführt wird, und mit einem einen Gehäusemantel (13) aufweisenden Elektromotor (10), von dem die beiden Pumpen (11, 12) gemeinsam antreibbar sind,
**dadurch gekennzeichnet, daß** die Systempumpe (11) eine druckgeregelte Verstellpumpe ist und daß von der zweiten Pumpe (12) Druckflüssigkeit unter Umgeheung der Systempumpe (11) im Umlauf von der Einlaßöffnung (46) über einen Kühlkreislauf in eine Rücklaufleitung (47) gefördert wird.

2. Hydraulisches Pumpenaggregat nach Anspruch 1, **dadurch gekennzeichnet, daß** die zweite Pumpe (12) ebenfalls eine hydrostatische Pumpe ist und daß die Fördermenge der zweiten Pumpe (12) größer als die maximale Fördermenge der Systempumpe (11) ist.

3. Hydraulisches Pumpenaggregat nach Anspruch 1 oder 2, **dadurch gekennzeichnet, daß** die Systempumpe (11) eine verstellbare Flügelzellenpumpe mit einem die Flügel (30) aufweisenden Rotor (29) und mit einem den Rotor umgebenden Hubring (31) ist und daß von der zweiten Pumpe (12) in den Kühlkreislauf geförderte Druckflüssigkeit im Niederdruckbereich (35) zwischen dem Rotor (29) und dem Hubring (31) der Systempumpe (11) axial hindurchfließt.

4. Hydraulisches Pumpenaggregat nach Anspruch 3, **dadurch gekennzeichnet, daß** sich die Flügelzellenpumpe (11) auf derselben Seite des Elektromotors (10) wie die zweite Pumpe (12) zwischen dieser und dem Elektromotor (10) befindet, daß die Flügelzellenpumpe und die zweite Pumpe derart zueinander angeordnet sind, daß der Hochdruckbereich (52) der zweiten Pumpe (12) und der Niederdruckbereich (35) der Flügelzellenpumpe (11) axial hintereinander liegen und daß von der zweiten Pumpe (12) geförderte Druckflüssigkeit vor Eintritt in den Kühlkreislauf zunächst die Flügelzellenpumpe (11) durchströmt.

5. Hydraulisches Pumpenaggregat nach einem vorhergehenden Anspruch, **dadurch gekennzeichnet, daß** der Kühlkreislauf durch einzelne Kanäle (15) im Gehäusemantel (13) des Elektromotors (10) hindurch zu der Rücklauföffnung (47) führt.

6. Hydraulisches Pumpenaggregat nach Anspruch 5, **dadurch gekennzeichnet, daß** sich die Einlaßöffnung (46) und die Rücklauföffnung (47) vor derselben Stirnseite des Gehäusemantels (13), vorzugsweise in einem Deckel (45) der zweiten Pumpe (12) befinden.

7. Hydraulisches Pumpenaggregat nach Anspruch 5 oder 6, **dadurch gekennzeichnet, daß** über den Umfang des Gehäusemantels (13) verteilt eine Gesamtzahl von Kanälen (15) axial durch den Gehäusemantel (13) hindurchgeht, von denen an einer Stirnseite des Gehäusemantels (13) wenigstens zwei und weniger als die Gesamtzahl über Teilringräume (60 - 63, 67 - 70, 88) derart fluidisch miteinander verbunden sind, daß die Druckflüssigkeit den Gehäusemantel (13) wenigstens viermal durchströmt.

8. Hydraulisches Pumpenaggregat nach Anspruch 5, 6 oder 7, **dadurch gekennzeichnet, daß** die Kanäle (15) zu wenigstens zwei parallel durchströmten, gleich langen Kreislaufzweigen zusammengefaßt sind.

9. Hydraulisches Pumpenaggregat nach Anspruch 8, **dadurch gekennzeichnet, daß** die zwei Kreislaufzweige von einem gemeinsamen Teilringraum (61, 88) an der einen Stirnseite des Gehäusemantels (13) ausgehen, der eine Kreislaufzweig, in Umfangsrichtung des Gehäusemantels (13) gesehen, über die eine Hälfte des Gehäusemantels und der andere Kreislaufzweig über die andere Hälfte des Gehäusemantels mäandriert und beiden Kreislaufzweige in einen gemeinsamen Teilringraum (63, 88) an der Stirnseite des Gehäusemantels münden.

10. Hydraulisches Pumpenaggregat nach Anspruch 7, 8 oder 9, **dadurch gekennzeichnet, daß** zwei unmittelbar benachbarte Kanäle (15) von demselben Teilringraum (60 - 63, 67 - 70, 88) an der einen Stirnseite des Gehäusemantels (13) ausgehen und in denselben Teilringraum (60 -63, 67 - 70, 88) an der anderen Stirnseite münden.

11. Hydraulisches Pumpenaggregat nach einem der Ansprüche 5 bis 10, **dadurch gekennzeichnet, daß** zur Bildung eines Teilringraums oder eines alle Kanäle verbindenden Ringraums der Gehäusemantel (13) an einer Stirnseite mit einer radial nach innen und axial offenen Aussparung (88) versehen ist, die radial nach außen bis über die Kanäle (15) reicht.

12. Hydraulisches Pumpenaggregat nach Anspruch 11, **dadurch gekennzeichnet, daß** ein von der Pumpenkammer der Systempumpe (11) ausgehender durch ein auf eine Stirnseite des Gehäusemantels (13) auf- und in die Stirnseite axial bis über die Aussparungen (88) eingesetztes Gehäuseteil (25) führender Kanal (92) des Kühlkreislaufs radial in eine Aussparung (88) mündet.

13. Hydraulisches Pumpenaggregat nach einem vorhergehenden Anspruch, **gekennzeichnet durch** ein Lüfterrad (80) zur Erzeugung eines über den Gehäusemantel (13) des Elektromotors (10) streichenden Luftstroms.

## Claims

1. A hydraulic pump power unit having a hydrostatic system pump (11) by which a hydraulic working system is supplied with pressure fluid via a pressure port (74), having a second pump (12) by which pressure fluid is sucked in via an intake opening (46) and conveyed to a low-pressure zone (35) of the system pump (11), and having an electric motor (10) with a housing shell (13) constituting a common drive for the two pumps (11, 12).
**characterized by** the fact that the system pump (11) is a pressure-controlled variable-displacement pump and that pressure fluid is circulated by the second pump from the intake opening (46) via a cooling circuit into a return line (47), while bypassing the system pump (11).

2. A hydraulic pump power unit according to claim 1, **characterized by** the fact that the second pump (12) is also a hydrostatic pump and that the delivery flow of the second pump (12) is larger than the maximum delivery flow of the system pump (11).

3. A hydraulic pump power unit according to claim 1 or 2, **characterized by** the fact that the system pump (11) is a variable-displacement vane pump with a rotor (29) carrying the vanes (30) and with a stroking ring (31) surrounding the rotor, and that pressure fluid delivered by the second pump (12) into the cooling circuit flows axially through the low-pressure zone (35) between the rotor (29) and the stroking ring (31) of the system pump (11).

4. A hydraulic pump power unit according to claim 3, **characterized by** the fact that the vane pump (11) is situated on the same side of the electric motor (10) as the second pump (12) between the latter and the electric motor (10), that the vane pump and the second pump are disposed in such a way relative to each other that the high pressure zone (52) of the second pump (12) and the low-pressure zone (35) of the vane pump (11) lie axially one behind the another and that pressure fluid delivered by the second pump (12) initially flows through the vane pump (11) before entering the cooling circuit.

5. A hydraulic pump power unit according to any of the preceding claims, **characterized by** the fact that the cooling circuit leads through individual channels (15) in the housing shell (13) of the electric motor (10) to the return line opening (47).

6. A hydraulic pump power unit according to claim 5, **characterized by** the fact that the intake opening (46) and the return line opening (47) are situated in front of the same end face of the housing shell (13), preferably in a cover (45) of the second pump (12).

7. A hydraulic pump power unit according to claim 5 or 6, **characterized by** the fact that a total number of channels (15) distributed around the circumference of the housing shell (13) pass axially through the housing shell (13), of which at least two and less than the total number are interconnected fluidically at one end face of the housing shell (13) via partial annular spaces (60 - 63, 67 - 70, 88) in such a manner that the pressure fluid flows through the housing shell (13) at least four times.

8. A hydraulic pump power unit according to claim 5, 6 or 7, **characterized by** the fact that the channels (15) are grouped into at least two circuit branches of equal length which are flowed through in parallel.

9. A hydraulic pump power unit according to claim 8, **characterized by** the fact that the two circuit branches issue from a common partial annular space (61, 88) at the one end face of the housing shell (13), the one circuit branch, seen in the circumferential direction of the housing shell (13), meanders over the one half of the housing shell and the other circuit branch over the other half of the housing shell, and both circuit branches open out into a common partial annular space (63, 88) at the end face of the housing shell.

10. A hydraulic pump power unit according to claim 7, 8 or 9, **characterized by** the fact that two immediately adjacent channels (15) issue from the same partial annular space (60 - 63, 67 - 70, 88) at the one end face of the housing shell (13) and open out into the same partial annular space (60 - 63, 67 - 70, 88) at the other end face.

11. A hydraulic pump power unit according to any of claims 5 to 10, **characterized by** the fact that for the purpose of forming a partial annular space or an annular space connecting all the channels the housing shell (13) is provided at one end face with a recess (88) that is open axially and in the radially inward direction and extends radially outwards beyond the channels (15).

12. A hydraulic pump power unit according to claim 11, **characterized by** the fact that a channel (92) of the cooling circuit issuing from the pump chamber of the system pump (11) leads through a housing part (25), inserted on one end face of the housing shell (13) and extending into the end face axially beyond the recesses (88), and opens out radially into one recess (88).

13. A hydraulic pump power unit according to any of the preceding claims, **characterized by** a fan wheel (80) for generating an air current flowing over the housing shell (13) of the electric motor (10).

## Revendications

1. Groupe moto-pompe hydraulique doté d'une pompe (11) de système hydrostatique, qui alimente un système producteur de travail hydraulique en fluide de pression au travers d'un raccord (74) de pression, doté d'une seconde pompe (12), qui aspire du fluide de pression par une ouverture (46) d'admission et le ramène vers une zone (35) de basse pression de la pompe (11) de système, et doté d'un moteur (10) électrique, qui présente une enveloppe (13) du corps et qui peut entraîner les deux pompes (11, 12) conjointement,
**caractérisé en ce que** la pompe (11) de système est une pompe à cylindrée variable à asservissement de la pression et que, en contournant de la pompe (11) de système, la seconde pompe (12) alimente du fluide de pression dans le circuit de l'ouverture (46) d'admission vers une conduite (47) de retour, passant par un circuit de refroidissement.

2. Groupe moto-pompe hydraulique selon la revendication n° 1,
**caractérisé en ce que** la seconde pompe (12) elle aussi est une pompe hydrostatique et que le débit de refoulement de la seconde pompe (12) est supérieur au débit de refoulement maximum de la pompe (11) de système.

3. Groupe moto-pompe hydraulique selon la revendication n° 1 ou n° 2,
**caractérisé en ce que** la pompe (11) de système est une pompe à palettes à cylindrée variable, dotée d'un induit (29) présentant les palettes (30) et dotée d'un stator (31) entourant l'induit, et que du fluide de pression alimenté par la seconde pompe (12) dans le circuit de refroidissement, dans la zone (35) de basse pression entre l'induit (29) et le stator (31), traverse la pompe (11) de système en s'écoulant dans la direction axiale.

4. Groupe moto-pompe hydraulique selon la revendication n° 3,
**caractérisé en ce que** la pompe (11) à palettes est située du même côté du moteur (10) électrique que la seconde pompe (12), entre celle-ci et le moteur (10) électrique, que la pompe à palettes et la seconde pompe sont disposées l'une par rapport à l'autre de façon à ce que la zone (52) de haute pression de la seconde pompe (12) et la zone (35) de basse pression de la pompe (11) à palettes soient situées l'une derrière l'autre dans la direction axiale et qu'avant de pénétrer dans le circuit de refroidissement, du fluide de pression alimenté par la seconde pompe (12) d'abord traverse la pompe (11) à palettes.

5. Groupe moto-pompe hydraulique selon une revendication précédente,
**caractérisé en ce que** le circuit de refroidissement mène vers l'ouverture (47) de retour en traversant des canaux (15) individuels dans l'enveloppe (13) du corps du moteur (10) électrique.

6. Groupe moto-pompe hydraulique selon la revendication n° 5,
**caractérisé en ce que** l'ouverture (46) d'admission et l'ouverture (47) de retour sont disposées devant la même face de l'enveloppe (13) du corps, de préférence dans un couvercle (45) de la seconde pompe (12).

7. Groupe moto-pompe hydraulique selon la revendication n° 5 ou n° 6,
**caractérisé en ce qu'**un nombre total de canaux (15) sont répartis le long de la périphérie de l'enveloppe (13) du corps et traversent l'enveloppe (13) du corps dans la direction axiale, sur lesquels au moins deux et un nombre inférieur au nombre total sont raccordés par voie fluide les uns aux autres, au niveau d'une face de l'enveloppe (13) du corps, par des chambres (60-63, 67-70, 88) annulaires partielles, de façon à ce que le fluide de pression traverse l'enveloppe (13) du corps au moins quatre fois.

8. Groupe moto-pompe hydraulique selon la revendication n° 5, n° 6 ou n° 7, **caractérisé en ce que** les canaux (15) sont réunis en au moins deux branches de circuit de même longueur, dont les flux sont parallèles.

9. Groupe moto-pompe hydraulique selon la revendication n° 8,
**caractérisé en ce que** les deux branches du circuit décrivent des méandres à partir d'une chambre (61, 88) annulaire partielle commune au niveau de l'une des faces de l'enveloppe (13) du corps, l'une des branches du circuit, considérée dans la direction périphérique de l'enveloppe (13) du corps, sur la première moitié de l'enveloppe du corps et l'autre branche du circuit sur l'autre moitié de l'enveloppe du corps, et les deux branches du circuit débouchent dans une chambre (63, 88) annulaire partielle commune au niveau de la face de l'enveloppe du corps.

10. Groupe moto-pompe hydraulique selon la revendication n° 7, n° 8 ou n° 9, **caractérisé en ce que** deux canaux (15) adjacents partent de la même chambre (60-63, 67-70, 88) annulaire partielle au niveau de l'une des faces de l'enveloppe (13) du corps et débouchent dans la même chambre (60-63, 67-70, 88) annulaire partielle au niveau de l'autre face.

11. Groupe moto-pompe hydraulique selon une des revendications n° 5 à n° 10, **caractérisé en ce qu'**au niveau d'une face, pour former une chambre annulaire partielle ou une chambre annulaire reliant tous les canaux, l'enveloppe (13) du corps est dotée d'un évidement (88), qui est ouvert dans la direction axiale et ouvert sur l'intérieur dans la direction radiale et qui s'étend vers l'extérieur, dans la direction radiale, au-delà des canaux (15).

12. Groupe moto-pompe hydraulique selon la revendication n° 11,
**caractérisé en ce qu'**un canal (92) du circuit de refroidissement, qui part de la chambre de pompe de la pompe (11) de système et qui traverse un élément (25) de corps, lequel est posé sur une face de l'enveloppe (13) du corps et est inséré dans la direction axiale dans la face jusqu'au-delà des évidements (88), débouche en direction radiale dans un évidement (88).

13. Groupe moto-pompe hydraulique selon une revendication précédente, **caractérisé par** une roue (80) de ventilation pour la production d'un flux d'air s'écoulant le long de l'enveloppe (13) du corps du moteur (10) électrique.
